# EUROPEAN PATENT SPECIFICATION

(11) **EP 0 337 528 B1**
(45) Date of publication and mention of the grant of the patent: **03.03.1993**
(21) Application number: 89200699.0
(22) Date of filing: 20.03.1989
(51) Int. Cl.: B65D 51/00, B65D 55/02, F16J 13/00

(54) **Safety cap for containers under steam pressure**
Sicherheitskappe für einen sich unter Dampfdruck befindenden Behälter
Capuchon de sécurité pour un récipient se trouvant sous pression de vapeur

(30) Priority: 13.04.1988 IT 2018688
(43) Date of publication of application: 18.10.1989
(73) Proprietor: POLTI S.P.A., 22077 Olgiate Comasco (Como) (IT)
(72) Inventor: Gorla, Mario, I-22077 Olgiate Comasco (IT); Polti, Franco, I-22077 Olgiate Comasco (IT)
(74) Representative: Riccardi, Sergio

(56) References cited:
- CH-A- 583 648
- US-A- 3 051 433
- US-A- 3 341 044

## Description

This invention relates to a safety cap which eliminates the dangers involved in the opening of a container under steam pressure.

There is an increase in potentially dangerous situations in our daily lives because of the growing number of electrical, hydraulic and pneumatic equipments available to solve various domestic problems and, as a result, accidents in the home are becoming increasingly frequent because these devices are handled by people who have no technical knowledge.

The increasingly widespread use of small steam generators for domestic use, for supplying steam irons, cleaning equipment, mangles, coffee machines, etc., has exacerbated these potential risk situations in the home, because people who have no technical background have a tendency to unscrew the caps of these containers while they are still subject to a considerable amount of steam pressure. While numerous systems have been devised to obviate this problem, it cannot be said that a satisfactory solution has been found to date since the devices produced are too complicated and expensive or too delicate or, most importantly, generally simply warn the user of the danger but do not make it impossible to open the container in question or, if they do, do not automatically cut-out when the pressure drops, so that the container can be opened once there is no longer any risk to the user.

The safety cap according to claim 1 solves this very important problem in a brilliant way, providing a safety cap which makes it impossible to open the container when there is a given dangerous level of pressure but permits opening when the steam pressure has dropped to a safe level which can eventually be regulated.

According to this invention, the problem is solved by means of a diaphragm which is subject to the action of the steam pressure which exists inside the container. When pressure is present, it interrupts the mechanical connection between the closing component screwed onto the mouth of the container and the cap which can be manipulated by the user, while when the pressure has dropped or ceased, it permits the connection to be made so that, when the cap is turned, the closing component can be unscrewed and thus the container can be opened. The mechanical connection between the closing component and the cap can be obtained in many ways, based on one or more intermediate components which change from an engaged position of a disengaged position by means of a pin which is an integral part of the diaphragm and thus follows the movements of the diaphragm.

Some embodiments of the safety cap according to this invention will now be described purely as non-limiting examples of the scope of the invention, with the aid of the following detailed description and the relative drawings attached, in which:
Figure 1 is an enlarged view of all the component parts of the safety cap of this invention in one of its first embodiments;
Figures 2A and 2B are cross section views of the assembled cap of figure 1, respectively in the position in which opening is permitted and in which opening is blocked; and
Figures 3A and 3B are cross sections like the previous ones, but of an embodiment of the safety cap of this invention with modifications.

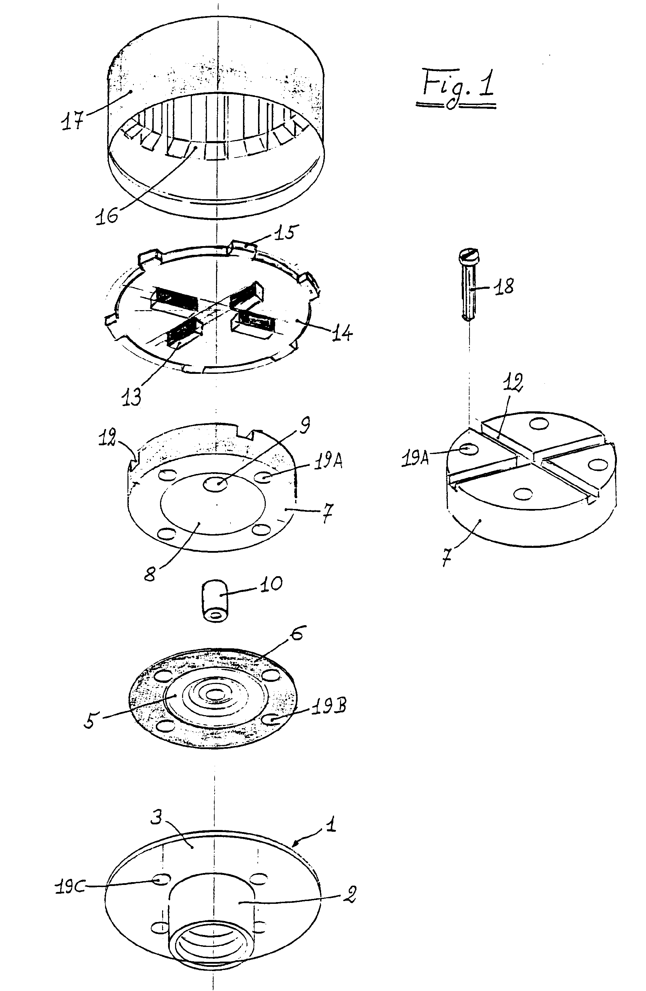

Referring first to figure 1 of the attached drawings, the safety cap according to this invention comprises a closing component 1 of the mouth of the container (not shown) consisting of an internally threaded neck 2 which is screwed onto the container and a head 3 provided with a central hole 4 through which the pressure inside the container communicates with a diaphragm 5, whose circumference 6 is hermetically sealed between the closing component 1 and an inner cap 7 which has an internal cavity 8 to accept the diaphragm 5. The centre of the cavity 8 is provided with a hole 9 for the passage of a pin 10 attached to a nipple 11 of the diaphragm 5, thus constituting an integral part of said diaphragm 5 and following its movements which are induced by the variations of the pressure in the container.

The upper face of the internal cap 7 has two intersecting grooves 12 which form a cross, into which four protuberences 13 of an intermediate plate 14 can insert themselves, said plate 14 having teeth 15 on its circumference which can lock together with the teeth 16 of the external cap 17 of the safety cap.

The unit constituted by the closing component 1, the diaphragm 5 and the internal cap 7 is assembled and held together by screws 18 or other similar fixing components, which pass through holes 19A-19B-19C which are in alignment and have been drilled in the three aforementioned components.

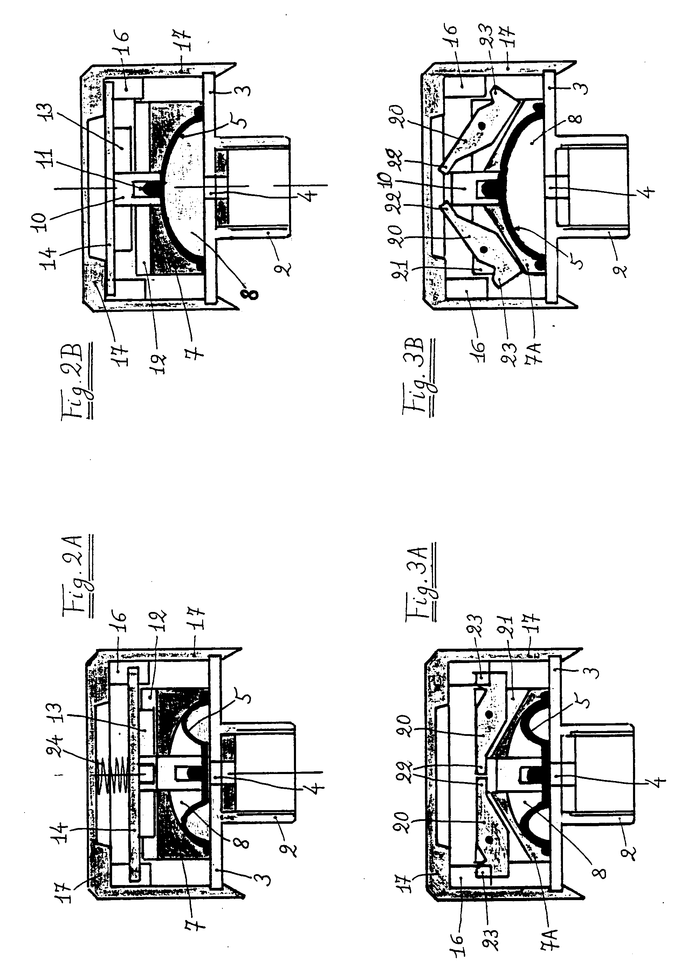

The way in which the safety cap described above functions is quite obvious and becomes clearer still from an examination of figs. 2A and 2B. When there is steam pressure inside the container, the diaphragm 5 is pushed upwards (figure 2B) and thus the pin 10 which is an integral part of it pushes up the intermediate plate 14 whose protruberances 13 become disengaged from the intersecting grooves 12 of the inner cap 7 and, therefore, the mechanical connection between the external cap 17 and the closing component 1 is interrupted and the user who tries to open the container twists the external cap 17 but nothing happens. When the container is not under pressure, the diaphragm 5 becomes limp (figure 2A) and the pin 10 drops and so the intermediate plate 14 drops onto the inner cap 7. When the user twists the external cap 17, the protruberances 13 engage with the intersecting grooves 12 and so the whole internal closing mechanism meshes and can be rotated so that the closing component can be unscrewed from the mouth of the container.

Figures 3A and 3B illustrate another method of creating the mechanical connection between the closing component 1 and the external cap 17. Here, two or more levers 20 are provided in the place of the intermediate plate 14, hinged to the inner cap 7A which, in this case, has suitable seats 21 to permit the movement of the levers 20. Each lever 20 has a tip 22 which is moved by the pin 10 and a tooth 23 which can mesh into the cavity of the internal teeth 16 of the external cap 17. When the container is under pressure, the pin 10 rises together with the diaphragm 5 (figure 3B) and lifts the tips 22 of the levers 29. As a consequence the teeth 23 are lowered and disengage themselves from the external cap 17, which thus produces no effect when it is turned. When pressure is absent, the pin 10 descends, the tips 22 are lowered and, as a consequence, the teeth 23 mesh once again into the internal teeth 16 of the external cap 17 (figure 3A) so that by turning the said cap 17 the closing component 1 can be unscrewed from the mouth of the container.

It must also be noted that in both forms of embodiments the intermediate connecting component (intermediate plate 14 or levers 20) is free and, therefore, is always detached from the closing unit when the container is upended and thus it is impossible to open the container and spill the contents when the container is in this upside down position. However it is also possible to insert a calibrated spring 24 (see figure 2A) between the intermediate plate 14 and the external cap 17, to permit regulation of the pressure to a level below which opening is possible and above which opening is blocked. Obviously this is a supplementary optional arrangement.

## Claims

1. Safety cap for containers under internal steam pressure comprising a closing component (1) screwed onto the mouth of the container and an external cap (17) which can be moved by the user, characterised by the fact that the safety cap is provided with a diaphragm (5) which is displaceable subject to the action of the steam pressure inside the container, said diaphragm having a first position interrupting the mechanical connection between the closing component (1) and the external cap (17) when pressure is present, such that when the external cap is turned, the closing component stays stationary and a second position permitting the connection to be made when the pressure is low or is absent, such that when the external cap (17) is turned the closing component (1) can be unscrewed and thus the container can be opened.

2. Safety cap according to claim 1, characterised by the fact that the mechanical connection between the closing component (1) and the external cap (17) is obtained by one or more intermediate parts (14;20) which are moved from an engaged to a disengaged position by means of a pin (10) which is an integral part of the diaphragm (5) and moves when the diaphragm moves.

3. Safety cap according to claim 2, characterised by the fact that the diaphragm (5) is fixed between the closing component (1) and an inner cap (7) which is an integral part of the closing component (1) on which the intermediate moving part (14;20) acts.

4. Safety cap according to claim 3, characterised by the fact that the inner cap (7) has a series of intersecting grooves (12) on its upper surface into which corresponding protruberances (13) of an intermediate plate-shaped component (14) fit, the perimeter of said component being provided with teeth (15) which mesh into corresponding teeth (16) inside the external cap (17).

5. Safety cap according to claim 3, characterised by the fact that the inner cap (7) has seats (21) for levers (20) which are hinged to it, said levers acting as intermediate components and being actuated by the pin (10) which is an integral part of the diaphragm (5), engaging with and disengaging from the internal teeth (16) of the external cap.

6. Safety cap according to one or more of the preceding claims, characterised by the fact of having a calibrated spring (24) inserted between the intermediate component (14;20) and the external cap (17) for the purpose of regulating the pressure threshold above which opening of the cap is blocked.

## Patentansprüche

1. Sicherheitskappe für unter internem Dampfdruck stehende Behälter, mit einer auf die Mundöffnung des Behälters aufschraubbaren Verschlußkomponente (1) und einer durch den Benutzer bewegbaren äußeren Kappe (17), dadurch gekennzeichnet, daß die Sicherheitskappe mit einer Membran (5) versehen ist, die unter der Einwirkung des Dampfdrucks innerhalb des Behälters verlagerbar ist und eine erste Position, die die mechanische Verbindung zwischen der Verschlußkomponente (1) und der äußeren Kappe (17) bei Vorhandensein von Druck unterbricht, derart, daß beim Drehen der externen Kappe die Verschlußkomponente stationär bleibt, und eine zweite Position besitzt, die die Herstellung der Verbindung erlaubt, wenn der Druck niedrig ist oder fehlt, derart, daß, wenn die äußere Kappe (17) gedreht wird, die Verschlußkomponente (1) abgeschraubt und folglich der Behälter geöffnet werden kann.

2. Sicherheitskappe nach Anspruch 1, dadurch gekennzeichnet, daß die mechanische Verbindung zwischen der Verschlußkomponente (1) und der äußeren Kappe (17) durch ein oder mehrere Zwischenteile (14; 20) erhalten wird, die mittels eines Stifts (10) von einer Eingriffstellung in eine außer Eingriff befindliche Position bewegt werden, wobei der Stift (10) ein integraler Teil der Membran (5) ist und sich bei Bewegung der Membran bewegt.

3. Sicherheitskappe nach Anspruch 2, dadurch gekennzeichnet, daß die Membran (5) zwischen der Verschlußkomponente (1) und einer Innenkappe (7), die ein integraler Teil der Verschlußkomponente (1) ist, auf die das bewegliche Zwischenteil (14; 20) einwirkt, befestigt ist.

4. Sicherheitskappe nach Anspruch 3, dadurch gekennzeichnet, daß die Innenkappe (7) an ihrer oberen Fläche eine Reihe von einschneidenden Rillen (12) besitzt, in die entsprechende Vorsprünge (13) einer plattenförmigen Zwischenkomponente (14) passen, wobei der Umfang der Komponente mit Zähnen (15) versehen ist, die in entsprechende Zähne (16) innerhalb der äußeren Kappe (17) eingreifen.

5. Sicherheitskappe nach Anspruch 3, dadurch gekennzeichnet, daß die Innenkappe (7) Sitze (21) für an ihr angelenkte Hebel (20) besitzt, die als Zwischenkomponenten wirken und durch den Stift (10), der einen integralen Teil der Membran (5) bildet, in Eingriff und außer Eingriff mit den inneren Zähnen (16) der äußeren Kappe gesteuert werden.

6. Sicherheitskappe nach einen oder mehreren der vorhergehenden Ansprüche, gekennzeichnet durch eine kalibrierte Feder (24), die zwischen der Zwischenkomponente (14; 20) und der äußeren Kappe (17) zum Zweck der Regulierung der Druckschwelle, oberhalb dessen die Öffnung der Kappe blockiert ist, eingefügt ist.

## Revendications

1. Chapeau de sécurité pour récipients sous pression interne de vapeur, comprenant un composant de fermeture (1) vissé sur l'embouchure du récipient et un chapeau extérieur (17) qui peut être manoeuvré par l'utilisateur, caractérisé en ce que le chapeau de sécurité comprend une membrane (5) qui est déplaçable par l'action de la pression de vapeur règnant à l'intérieur du récipient, ladite membrane ayant une première position qui interrompt la liaison mécanique entre le composant de fermeture (1) et le chapeau extérieur (17) lorsque la pression est présente, de sorte que, lorsqu'on tourne le chapeau extérieur, le composant de fermeture reste immobile, et une deuxième position permettant à la liaison de s'établir lorsque la pression est faible ou nulle, de sorte que, lorsqu'on tourne le chapeau extérieur (17), on peut dévisser le composant de fermeture (1) et on peut ainsi ouvrir le récipient.

2. Chapeau de sécurité suivant la revendication 1, caractérisé en ce que la liaison mécanique entre le composant de fermeture (1) et le chapeau extérieur (17) est effectuée par une ou plusieurs parties intermédiaires (14;20) qui sont déplacées d'une position d'engagement à une position de dégagement au moyen d'une tige (10) qui est une partie solidaire de la membrane (5) et qui se déplace lorsque la membrane se déplace.

3. Chapeau de sécurité suivant la revendication 2, caractérisé en ce que la membrane (5) est fixée entre le composant de fermeture (1) et un chapeau intérieur (7) qui est une partie solidaire du composant de fermeture (1) sur lequel agit la partie intermédiaire mobile (14; 20).

4. Chapeau de sécurité suivant la revendication 3, caractérisé en ce que le chapeau intérieur (7) comporte, dans sa surface supérieure, une série de rainures en intersection (12) dans lesquelles se logent des protubérances correspondantes (13) d'un composant intermédiaire en forme de plaque, le périmètre dudit composant comportant des dents (15) qui s'imbriquent dans des dents correspondantes (16) prévues à l'intérieur du chapeau extérieur (17).

5. Chapeau de sécurité suivant la revendication 3, caractérisé en ce que le chapeau intérieur (7) comporte des sièges(21)pour des leviers (20) qui sont articulés sur ce chapeau, lesdits leviers agissant comme composants intermédiaires et étant actionnés par la tige (10) qui est une partie solidaire de la membrane (5) de manière à venir en prise avec les dents intérieures (16) du chapeau extérieur et à se dégager de ces dents.

6. Chapeau de sécurité suivant une ou plusieurs des revendications précédentes, caractérisé en ce qu'il comprend un ressort calibré (24) inséré entre le composant intermédiaire (14;20) et le chapeau extérieur (17) dans le but de régler le seuil de pression au-dessus duquel l'ouverture du chapeau est empêchée.
